# EUROPÄISCHE PATENTANMELDUNG

(11) **EP 4 707 205 A1**
(43) Veröffentlichungstag der Anmeldung: **11.03.2026**
(21) Anmeldenummer: 25166475.1
(22) Anmeldetag: 26.03.2025
(51) Int. Cl.: B65G 47/44, B65G 47/51

(54) **ABFALLAUFBEREITUNGSANLAGE MIT VERSCHMUTZUNGSGESCHÜTZTER STREBE**

(30) Priorität: 27.03.2024 DE 102024108864
(71) Anmelder: Westeria GmbH, 48346 Ostbevern (DE)
(72) Erfinder: Westbrock, Bernhard, 48291 Telgte (DE)
(74) Vertreter: Patentanwälte Olbricht Buchhold Keulertz

(57) **Zusammenfassung**

Bei einer Abfallaufbereitungsanlage (1), die dazu eingerichtet ist, einen Strom aus Abfallpartikeln zu behandeln, schlägt die Erfindung vor, dass die Abfallaufbereitungsanlage (1) eine Strebe (5) aufweist, die im Abfallstrom liegt, wobei die Strebe (5) mit einem Hüllrohr (7) ummantelt ist und das Hüllrohr (7) um seine Längsachse drehbar ist.

## Beschreibung

Die Erfindung betrifft eine Abfallaufbereitungsanlage, die dazu eingerichtet ist, einen Strom aus Abfallpartikeln zu behandeln.

Gattungsgemäße Abfallaufbereitungsanlagen sind aus der Praxis bekannt. Auch die EP 2 486 986 B1 zeigt eine solche Abfallaufbereitungsanlage, wobei hier der Abfallstrom von einem ersten Förderband transportiert und auf ein zweites, breiteres Förderband übergeben wird, das als Breitband bezeichnet ist. Eine Verteilvorrichtung ist im Bereich der Übergabe vom ersten Förderband auf das Breitband angeordnet und dient dazu, die einzelnen Bestandteile des Abfallstroms auf möglichst die gesamte Breite des Breitbandes zu verteilen, um eine anschließende Sortierung oder Sichtung dieser Bestandteile zu erleichtern.

In der Praxis werden die Abfallstoffe üblicherweise zerkleinert, um deren Handhabung zu erleichtern. In der Praxis tritt jedoch immer wieder das Problem auf, dass einzelne Bestandteile des Abfallstroms deutlich größer sind als die beim Zerkleinern angestrebten Abmessungen. Beispielsweise kann der Abfallstrom auch nach dem Durchlaufen einer Zerkleinerungsvorrichtung längliche Folienstücke wie Magnetbänder aus Audio- oder Videokassetten oder längliche Textilstreifen enthalten, welche die angestrebten Maximalabmessungen deutlich überschreiten. Diese länglichen und zu großen Bestandteile können sich auf Flächen der Abfallaufbereitungsanlage ablagern und ansammeln, so dass der weitere Betrieb der Abfallaufbereitungsanlage gestört wird und die angesammelten Bestandteile entfernt werden müssen. Dies stellt erstens einen nachteiligen Arbeitsaufwand dar, und je nach Ausgestaltung der Abfallaufbereitungsanlage und der freizuräumenden Anlagenteile kann dies zweitens aus Sicherheitsgründen einen Stillstand der Abfallaufbereitungsanlage erfordern, was besonders nachteilig ist und die Leistungsfähigkeit der Abfallaufbereitungsanlage erheblich beeinträchtigt.

Aus der CN 115 870 306 A ist für den Bereich der Aufbereitung von Bauschutt eine Zerkleinerungsvorrichtung zur Herstellung von Ziegeln aus Bauschutt bekannt. Mittels dieser Vorrichtung wird der Energieeinsatz beim Recycling vorteilhaft gering gehalten, weil größere Gesteinsbrocken nicht vollständig zermahlen werden, sondern lediglich in Stücke geschnitten werden. Die Zerkleinerungsvorrichtung ist im Wesentlichen becherförmig aufgebaut, mit einer hohlzylindrischen Mantelfläche, deren Mittelachse aufrecht stehend ausgerichtet ist und die oben und unten offen ist. Von oben werden die aufzubereitenden Bauschutt-Bestandteile in die Zerkleinerungsvorrichtung gegeben. Unten sind in dem Becherboden kleinere Auslassöffnungen angeordnet, durch welche der zerkleinerte Bauschutt aus der Zerkleinerungsvorrichtung herausgelangt.

Vom Boden der Zerkleinerungsvorrichtung der CN 115 870 306 A erstrecken sich mehrere zylindrische Stahlsäulen aufrecht nach oben, wobei die Stahlsäulen jeweils an ihrem unteren Ende ein liegend ausgerichtetes Zahnrad aufweisen. Die Zahnräder der Stahlsäulen sind zwischen der Außenverzahnung einer kreisrunden zentralen Zahnscheibe und der Innenverzahnung eines außen umlaufenden Zahnrings angeordnet und kämmen mit diesen beiden Verzahnungen. Der Zahnring ist motorisch angetrieben, so dass die Stahlsäulen sich um ihre Längsachsen drehen und dabei um die zentrale Zahnscheibe wandern. Die Stahlsäulen wirken wie Mitnehmer, und die Zerkleinerungswirkung erfolgt durch die Bewegung des Bauschutts selbst, nicht durch die Teile der Zerkleinerungsvorrichtung, wodurch im Vergleich zu herkömmlichen Zerkleinerungsvorrichtungen der Verschleiß und die Ausfallwahrscheinlichkeit verringert werden.

Gemäß der CN 115 870 306 A erfolgt bei der Aufbereitung des Bauschutts zunächst eine Vorsortierung, bevor das Material in die Zerkleinerungsvorrichtung gegeben wird. Ausdrücklich soll nur Material in die Vorrichtung gelangen, das zur Herstellung von Ziegelsteinen verwendet werden kann, nämlich Ziegelsteine, Betonklötze und anderer dafür geeigneter Abfall. Andere Elemente gelangen aufgrund der Vorsortierung nicht in die Zerkleinerungsvorrichtung, so dass sich ein Verschmutzungsproblem durch ungeeignetes Fremdmaterial - wie z. B. durch Folien und dergleichen - nicht ergibt.

Der Erfindung liegt die Aufgabe zugrunde, eine gattungsgemäße Abfallaufbereitungsanlage dahingehend zu verbessern, dass diese möglichst störungsfrei und wartungsarm betrieben werden kann.

Diese Aufgabe wird durch eine Abfallaufbereitungsanlage mit den Merkmalen des Anspruchs 1 gelöst. Vorteilhafte Ausgestaltungen sind in den Unteransprüchen beschrieben.

Die Erfindung betrifft eine Ausgestaltung der Abfallaufbereitungsanlage, bei welcher eine Strebe im Abfallstrom liegt. Im Unterschied zu der Zerkleinerungsvorrichtung der CN 115 870 306 A, deren Stahlsäulen aufrecht stehen, liegt die Strebe der erfindungsgemäßen Abfallaufbereitungsanlage, sie ist also nicht stehend, sondern liegend ausgerichtet. Dies kann beispielsweise bei einer Übergabe des Abfallstroms von einem auf ein anderes Fördererorgan der Fall sein, wenn beispielsweise eine Verteilvorrichtung eine Strebe aufweist oder von einer Strebe getragen wird. Die Erfindung schlägt vor, dass die Strebe von einem Hüllrohr ummantelt ist, welches drehbar ist. Dabei geht die Erfindung von der Überlegung aus, dass sich die Bestandteile nun nicht auf der Strebe selbst ablagern können, sondern vielmehr auf dem Hüllrohr. Dadurch, dass das Hüllrohr um seine Längsachse drehbar ist, werden die darauf liegenden Ablagerungen automatisch von dem Hüllrohr herabfallen, sobald sich das Hüllrohr dreht.

Dadurch, dass die Strebe in dem Hüllrohr aufgenommen ist, werden Spalten vermieden, die ansonsten zwischen der Strebe und einem separaten Rohr von außen zugänglich wären, so dass Bestandteile des Abfallstroms in einen solchen Spalt hineingezogen werden könnten, wodurch die Drehbeweglichkeit des drehbaren Rohrs behindert oder die Anlagerung weiterer Bestandteile begünstigt werden könnte. Das Hüllrohr kann einen runden, beispielsweise kreisrunden, oder auch einen mehreckigen, z. B. sechs- oder achteckigen Querschnitt aufweisen.

Das Hüllrohr kann frei drehbar gelagert sein. Insbesondere wenn es einen möglichst geringen Drehwiderstand aufweist, also möglichst leichtgängig gelagert ist, kann eine automatische Abreinigung des Hüllrohrs ohne äußere Einwirkungen allein dadurch erreicht werden, dass die auf dem Hüllrohr liegenden Bestandteile des Abfallstroms aufgrund eines exzentrischen Schwerpunkts dieser Ablagerungen automatisch die Drehbewegung des Hüllrohrs auslösen.

In einer als vorteilhaft erachteten Ausgestaltung ist jedoch vorgesehen, dass das Hüllrohr um seine Längsachse drehbar angetrieben ist. Auf diese Weise wird die gewünschte Abreinigungswirkung des Hüllrohrs, nämlich aufgrund seiner Drehbewegung, sichergestellt, auch wenn im Betrieb auftretende Temperaturschwankungen, Verschmutzungen oder ähnliche Einflüsse eine ausreichend leichtgängige freie Drehbeweglichkeit des Hüllrohrs beeinträchtigen würden.

Der Antrieb des Hüllrohrs kann grundsätzlich in einer einzigen Drehrichtung erfolgen, entweder intermittierend oder kontinuierlich. In der Praxis können jedoch Fälle auftreten, bei denen ein länglicher Bestandteil in der Art außermittig auf dem Hüllrohr liegt, dass das Hüllrohr aufgrund seiner Drehbewegung diesen überwiegend einseitig herabhängenden Bestandteil nach oben, auf das Hüllrohr zu fördern bestrebt ist, wobei jedoch das Eigengewicht dieses Bestandteils eine solche Förderbewegung verhindert und stattdessen das Hüllrohr sich unter diesem Bestandteil hinweg dreht, ohne diesen Bestandteil des Abfallstroms mitzunehmen. In einer Ausgestaltung erfolgt daher der Antrieb des Hüllrohrs oszillierend, nämlich mit wechselnden Drehrichtungen, so dass in diesem Fall spätestens nach einer Drehrichtungsumkehr der auf dem Hüllrohr liegende Bestandteil des Abfallstroms von dem Hüllrohr herabfällt. Aufgrund der Drehrichtungsumkehrkann auf Mitnehmer verzichtet werden, die ansonsten außen an dem Hüllrohr vorgesehen sein könnten, die aber ihrerseits ggf. zu unerwünschten Anlagerungen bestimmter Bestandteile führen könnten.

In einer Ausgestaltung ist das Hüllrohr mittels eines umlaufenden Antriebselements wie zum Beispiel einer Kette, eines Riemens oder dergleichen angetrieben. Diese Antriebsart hat sich in ersten, nicht-öffentlichen Versuchen als robust und störungsfrei herausgestellt. Eine konstruktiv besonders einfache sowie wirtschaftliche Ausgestaltung eines solchen Antriebs kann dadurch erreicht werden, dass das umlaufende Antriebselement in einer Ebene verläuft, die sich senkrecht zur Längsachse des Hüllrohrs erstreckt.

In einer Ausgestaltung weist die Abfallaufbereitungsanlage ein Förderband auf, welches dazu dient, den Abfallstrom zu transportieren. Die Strebe, die erfindungsgemäß von dem Hüllrohr ummantelt ist, dient dazu, ein Verteilerorgan zu tragen, welches den auftreffenden Abfallstrom auf das Förderband verteilt. Dementsprechend gelangt der Abfallstrom zunächst auf das Verteilerorgan und erst anschließend auf das Förderband, und in der Praxis kann nicht verhindert werden, dass Bestandteile des Abfallstroms auf die Strebe geraten, die das Verteilerorgan trägt. Durch das Hüllrohr wird die Ansammlung einer unerwünscht großen Menge von Bestandteilen des Abfallstroms auf der Strebe verhindert, so dass die Strebe nicht im Zuge von Wartungsarbeiten regelmäßig abgereinigt zu werden braucht oder gar die gesamte Abfallaufbereitungsanlage zu diesem Zweck angehalten zu werden braucht.

Das erwähnte Verteilerorgan ist in einer Ausgestaltung als Drehteller ausgestaltet. Derartige Verteilerorgane haben sich in der Praxis hervorragend bewährt aufgrund ihrer Eigenschaften, das auftreffende Gut möglichst gleichmäßig zu verteilen und weil sie einen robusten und störungsfreien Betrieb ermöglichen.

Die das Verteilerorgan tragende Strebe ist in einer Ausgestaltung quer zum Förderband beweglich gelagert, um eine Einstellung des Verteilerorgans in Anpassung an den Abfallstrom zu ermöglichen. Je nach der in der Praxis auftretenden Zusammensetzung des Abfallstroms und der sich daraus ergebenden Flugbahn der einzelnen Bestandteile kann somit die optimale Verteilwirkung erreicht werden. Aus demselben Grund kann in einer Ausgestaltung die Strebe in Längsrichtung des Förderbandes beweglich gelagert sein, so dass auch in dieser Richtung der Auftreffpunkt des Abfallstroms auf das Verteilerorgan beeinflusst werden kann und somit das Verteilerorgan zugunsten einer optimalen Verteilwirkung eingestellt werden kann.

In einer Ausgestaltung ist der Drehteller mittels eines umlaufenden Antriebselements angetrieben, welches sich längs durch die Strebe erstreckt. Dabei läuft das Antriebselement um zwei Umlenkräder, die jeweils außerhalb der Strebe angeordnet sind. Zwischen den beiden Umlenkrädern, nämlich dort, wo das Antriebselement innerhalb der Strebe verläuft, weisen das hinlaufende und das rücklaufende Trum des Antriebselements einen Abstand auf, der geringer ist als der Durchmesser der beiden Umlenkräder, so dass das Antriebselement innerhalb der Strebe tailliert verläuft. Auf diese Weise kann die Strebe möglichst schmal ausgestaltet werden, so dass sie und auch das die Strebe umgebende Hüllrohr den Bestandteilen des Abfallstroms eine möglichst kleine Oberfläche bietet, auf welcher sich die Bestandteile ablegen können.

Die Strebe kann einen geschlossenen, rohrförmigen Querschnitt aufweisen, beispielsweise als Rundrohr, Rechteckrohr oder dergleichen, sie kann jedoch auch als gekantetes Blechprofil, Strangpressprofil oder dergleichen ausgestaltet mit einem offenen Querschnitt ausgestaltet sein, beispielsweise als nach unten offenes U-Profil.

Die beiden Umlenkräder können beide frei drehbar sein, so dass der Antrieb des Antriebselements durch beispielsweise ein drittes, als Antriebsrad ausgestaltetes Rad erfolgen kann. Beide Umlenkräder können jedoch auch angetrieben sein, so dass das Antriebselement möglichst gleichmäßig mit Antriebskräften belastet wird. In einer besonders wirtschaftlichen Ausgestaltung kann jedoch eines der beiden Umlenkräder als Antriebsrad und das andere Umlenkrad frei drehbar ausgestaltet sein.

Ein Ausführungsbeispiel der Erfindung wird anhand der rein schematischen Darstellungen nachfolgend näher erläutert. Dabei zeigt
- Fig. 1: eine perspektivische Ansicht schräg von unten auf einen Ausschnitt aus einer Abfallaufbereitungsanlage, nämlich in Form einiger Elemente eines Ausführungsbeispiels einer erfindungsgemäßen Verteilstation, wobei einige Elemente nicht dargestellt sind,
- Fig. 2: eine Ansicht von unten auf die Verteilstation der Fig. 1, wobei einige Elemente geschnitten dargestellt sind,
- Fig. 3: eine perspektivische Ansicht von oben auf einen Ausschnitt aus einer Abfallaufbereitungsanlage, nämlich in Form einiger Elemente einer Verteilstation, die nicht Gegenstand der Erfindung ist, und
- Fig. 4: die Verteilstation der Fig. 3 aus einer anderen Blickrichtung.

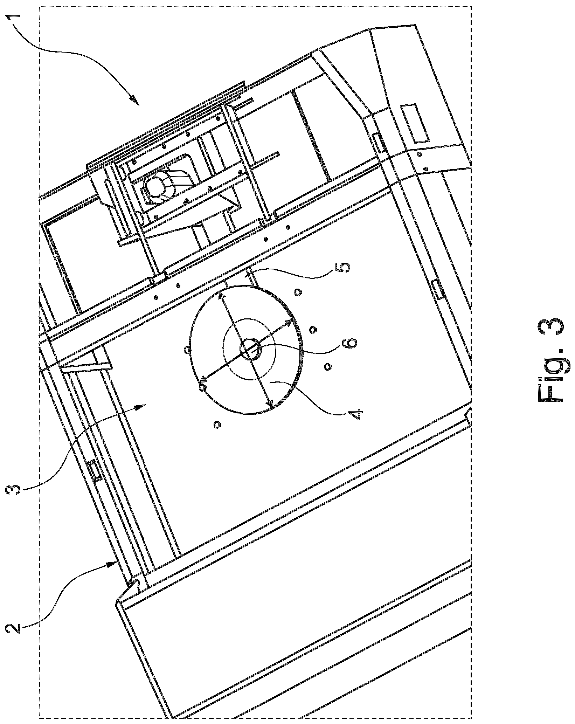

Fig. 3 zeigt ausschnittsweise eine nicht erfindungsgemäß ausgestaltete Abfallaufbereitungsanlage 1, insbesondere eine Verteilstation 2, die oberhalb eines lediglich durch einen Pfeil angedeuteten unteren Förderbandes 3 angeordnet ist. Ein Abfallstrom aus zerkleinerten Abfällen trifft von oben, herangeführt beispielsweise durch ein oberes, in der Zeichnung nicht ersichtliches Förderband oder ein anderen Förderorgan, im freien Fall auf ein Verteilorgan, das als Drehteller 4 ausgestaltet ist, der am freien Ende einer Strebe 5 um eine Drehachse 6 drehbar angetrieben ist.

Entsprechend den vier auf dem Drehteller 4 angedeuteten Pfeilen ist die Strebe 5 sowohl in ihrer Längsrichtung als auch quer dazu beweglich, so dass der Drehteller 4 an die Flugbahn der auftreffenden Bestandteile angepasst und so eingestellt werden kann, dass die Bestandteile des Abfallstroms mittels des Drehtellers 4 optimal gleichmäßig über möglichst die gesamte Breite des unteren Förderbandes 3 verteilt werden. Zu diesem Zweck kann auch die Schrägstellung des Drehtellers 4 beeinflusst werden, indem die Strebe 5 um ihre Längsachse schwenkbar ist und eine dementsprechende Winkelverstellung ermöglicht.

Die Strebe 5 weist einen rechteckigen Querschnitt auf und es ist ersichtlich, dass die Oberseite der Strebe 5 eine Ablagefläche bildet, auf welcher sich solche Bestandteile des Abfallstroms ablegen können, die nicht mittels des Drehtellers 4 auf das darunterliegende Förderband 3 verteilt werden.

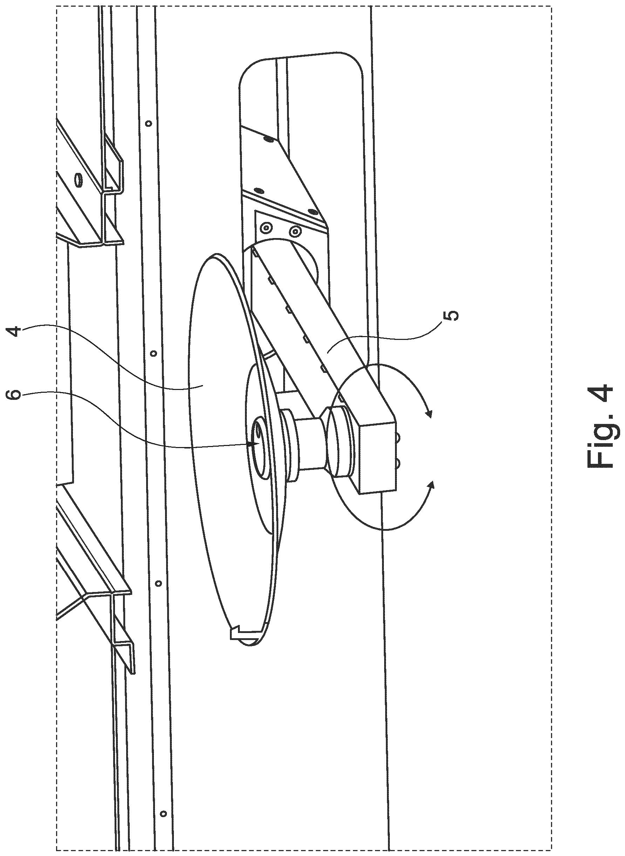

Fig. 4 zeigt die Verteilstation 2 der Fig. 3 aus einem anderen Blickwinkel. Durch einen gebogenen Doppelpfeil ist die Schwenkbeweglichkeit oder Kippbeweglichkeit der Strebe 5 um ihre Längsachse angedeutet. Die Strebe 5 weist über ihre gesamte Länge einen konstanten Querschnitt auf und erstreckt sich bis unter die Drehachse 6 des Drehtellers 4.

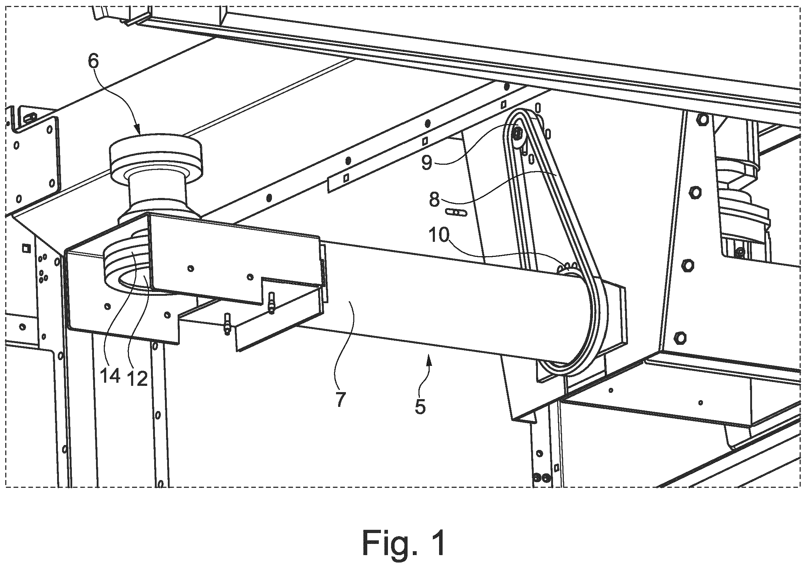

Fig. 1 zeigt einen Anblick schräg von unten auf die Strebe 5 einer erfindungsgemäß ausgestalteten Abfallaufbereitungsanlage, wobei die Strebe 5 in Längs- und Querrichtung sowie um ihre Längsachse ebenso verstellbar ist wie die Strebe 5 der Verteilstation 2 von Fig. 3 und 4. Erfindungsgemäß ist die Strebe 5 von einem Hüllrohr 7 ummantelt. In der Ansicht von Fig. 1 ist der Drehteller 4 nicht auf dem Achskörper der Drehachse 6 montiert dargestellt. Das Hüllrohr 7 weist bei dem dargestellten Ausführungsbeispiel einen kreisrunden Querschnitt auf und wird durch ein umlaufendes Antriebselement in Form einer Kette 8 angetrieben, so dass es um seine Längsachse drehbar ist. Die Kette 8 verläuft von einem Antriebsritzel 9 zu einem Kettenrad 10, welches mit dem Hüllrohr 7 verbunden ist.

Weiterhin ist in Fig. 1 ersichtlich, dass die Strebe 5 an einen Strebenkopf 11 anschließt, der im Gebrauch von dem Drehteller 4 überdeckt wird, so dass der Strebenkopf 11 im Gebrauch vor Ablagerungen von Bestandteilen des Abfallstroms geschützt ist. In dem Strebenkopf 11 ist ein Umlenkrad 12 angeordnet, um welches ein umlaufendes Antriebselement in Form eines Riemens 14 verläuft, der bei dem dargestellten Ausführungsbeispiel als Mehrfachriemen ausgestaltet ist.

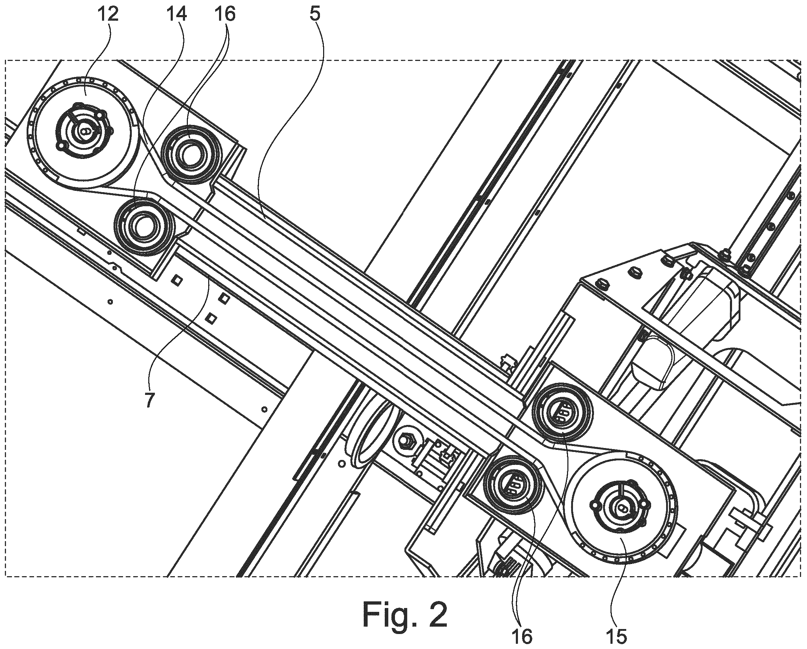

Fig. 2 zeigt in einer Ansicht von unten den geöffneten Strebenkopf 11 sowie, jeweils in Längsrichtung geschnitten, die Strebe 5 und das Hüllrohr 7. Es ist erkennbar, dass der um das Umlenkrad 12 laufende Riemen 14 durch die Strebe 5 bis zu einem zweiten, angetriebenen Umlenkrad 15 verläuft. Beide Umlenkräder 12 und 15 weisen jeweils einen Durchmesser auf, der größer ist als die Breite der Strebe 5. Mithilfe von vier Umlenkrollen 16 wird der Riemen 14 so geführt, dass er innerhalb der Strebe 5 tailliert verläuft und die Strebe 5 vorteilhaft schmal ausgestaltet sein kann.

### Bezugszeichen:

- 1: Abfallaufbereitungsanlage
- 2: Verteilstation
- 3: Unteres Förderband
- 4: Drehteller
- 5: Strebe
- 6: Drehachse
- 7: Hüllrohr
- 8: Kette
- 9: Antriebsritzel
- 10: Kettenrad
- 11: Strebenkopf
- 12: Umlenkrad
- 14: Riemen
- 15: Umlenkrad, angetrieben
- 16: Umlenkrolle

## Patentansprüche

1. Abfallaufbereitungsanlage (1), die dazu eingerichtet ist, einen Strom aus Abfallpartikeln zu behandeln,
**dadurch gekennzeichnet,**
**dass** die Abfallaufbereitungsanlage (1) eine Strebe (5) aufweist, die im Abfallstrom liegt,
wobei die Strebe (5) mit einem Hüllrohr (7) ummantelt ist und das Hüllrohr (7) um seine Längsachse drehbar ist.

2. Abfallaufbereitungsanlage nach Anspruch 1,
**dadurch gekennzeichnet,**
**dass** das Hüllrohr (7) um seine Längsachse drehbar angetrieben ist.

3. Abfallaufbereitungsanlage nach Anspruch 2,
**dadurch gekennzeichnet,**
**dass** das Hüllrohr (7) mit wechselnder Drehrichtung oszillierend angetrieben ist.

4. Abfallaufbereitungsanlage nach Anspruch 2 oder 3,
**dadurch gekennzeichnet,**
**dass** das Hüllrohr (7) mittels eines umlaufenden Antriebselements angetrieben ist,
welches in einer Ebene verläuft, die sich senkrecht zur Längsachse des Hüllrohrs (7) erstreckt.

5. Abfallaufbereitungsanlage nach einem der vorhergehenden Ansprüche,
**dadurch gekennzeichnet,**
**dass** die Abfallaufbereitungsanlage (1) ein Förderband (3) aufweist,
und **dass** die Strebe (5) ein Verteilorgan trägt, welches den auftreffenden Abfallstrom auf das Förderband (3) verteilt.

6. Abfallaufbereitungsanlage nach einem Anspruch 5,
**dadurch gekennzeichnet,**
**dass** das Verteilorgan als Drehteller (4) ausgestaltet ist.

7. Abfallaufbereitungsanlage nach einem Anspruch 5 oder 6, **dadurch gekennzeichnet,**
**dass** die Strebe (5) in einer Bewegungsrichtung quer zum Förderband (3) beweglich gelagert ist.

8. Abfallaufbereitungsanlage nach einem der Ansprüche 5 bis 7,
**dadurch gekennzeichnet,**
**dass** die Strebe (5) in Längsrichtung des Förderbandes (3) beweglich gelagert ist.

9. Abfallaufbereitungsanlage nach einem der Ansprüche 6 bis 8,
**dadurch gekennzeichnet,**
**dass** der Drehteller (4) mittels eines umlaufenden Antriebselements angetrieben ist,
welches sich längs durch die Strebe (5) erstreckt,
wobei das Antriebselement um zwei Umlenkräder (12, 15) verläuft, die beiderseits außerhalb der Strebe (5) angeordnet sind,
und wobei das Antriebselement innerhalb der Strebe (5) tailliert verläuft.
